# EUROPEAN PATENT APPLICATION

(11) **EP 4 759 123 A1**
(43) Date of publication of application: **17.06.2026**
(21) Application number: 24218984.3
(22) Date of filing: 11.12.2024
(51) Int. Cl.: A01D 69/06, F16H 7/08, A01D 41/127, A01F 12/40

(54) **BELT DRIVE MONITORING SYSTEM**

(71) Applicant: CNH Industrial Belgium N.V., 8210 Zedelgem (BE)
(72) Inventor: Devos, Steven, 8210 Zedelgem (BE); Missotten, Bart M.A., 8210 Zedelgem (BE); Vandevelde, Pieter, 8210 Zedelgem (BE); Jongmans, Dré W.J., 8210 Zedelgem (BE)
(74) Representative: CNH Industrial IP Department

(57) **Abstract**

A belt drive system (200) for a functional unit of an agricultural machine comprises a driven pulley (210) and a driving pulley (220), a drive belt (230), a tensioner system (240) for tensioning the drive belt (230), and a vibration sensor (250). The drive belt (230) interconnects the driven pulley (210) with the driving pulley (220). The vibration sensor (250) is positioned on the tensioner system (240) and configured to provide a vibration signal.

## Description

### TECHNICAL FIELD

The present invention relates to a belt drive system for a functional unit of an agricultural machine. The belt drive system comprises a driven pulley and a driving pulley, a drive belt interconnecting the driven pulley with the driving pulley, and a tensioner system configured for tensioning the drive belt. The invention further relates to an agricultural machine comprising such a belt drive system, and more specifically, a combine harvester with a belt driven straw chopper.

### BACKGROUND

Many agricultural harvesters are designed to harvest crops, perform some initial processing on the harvested crop, and possibly leave some parts of the harvested crop behind in the field. Many functional units of such agricultural harvesters are mechanically driven by a belt drive system that couples the respective functional unit to an engine or motor of the agricultural harvester.

In a combine harvester, for example, the harvested crop is threshed to separate the grain therefrom, and the remaining straw is transported to the rear of the combine harvester for release on the field. The release of straw residue behind the combine harvester may be done by dropping the straw in a swath on the field, for example to allow it being picked up by a baler machine later. Often, however, the straw residue is chopped into smaller pieces by a straw chopper and spread over the field by a spreader system. Chopping large volumes of straw at high speed requires a powerful straw chopper. Straw choppers for combine harvesters often use a rotating shaft or drum with a plurality of knives extending radially therefrom. The shaft or drum is at least partly located inside a chopper housing and oriented at least approximately in parallel with the field and perpendicular to the driving direction of the harvester. The unchopped straw is received at an inlet of the chopper housing that is typically located at the top and/or front end of the chopper housing. Chopped straw is released from an outlet of the chopper housing that is typically located more to the bottom and/or rear end of the chopper housing. In use the knives rotate around the rotational axis of the shaft or drum at high speed. Counter knives are usually positioned adjacent the chopper housing outlet, such that the straw is chopped between a rotating knife and a stationary counter knife. When a plurality of knives are provided along the width of the straw chopper, the straw is chopped into many smaller pieces before it leaves the chopper housing. Straw choppers like this are typically driven by a belt drive system that is connected to one of the two ends of the rotating shaft or drum.

Belt drive systems typically comprise a driving pully that is, directly or indirectly, driven by the engine or motor, and a driven pulley that is connected to a drive shaft of the functional unit. A drive belt, connected between the two pulleys, transmits the rotational motion of the driving pully to the driven pully. A belt tensioner may be provided for ensuring an effective transfer of power between the driving pulley and the belt, as well as between the belt and the driven pulley. Various aspects and circumstances may negatively affect the efficiency and efficacy of the power transfer. For example, belt wear, belt misalignment, or a lack or surplus of tension on the drive belt, may impede the optimal functioning of the functional unit.

It is an aim of the present invention to address one or more disadvantages associated with the prior art.

### SUMMARY OF THE INVENTION

According to an aspect of the invention there is provided a belt drive system for a functional unit of an agricultural machine. The belt drive system comprises a driven pulley and a driving pulley, a drive belt, a tensioner system for tensioning the drive belt, and a vibration sensor. The drive belt interconnects the driven pulley with the driving pulley. The vibration sensor is positioned on the tensioner system and configured to provide a vibration signal.

Positioning the vibration sensor on the tensioner system allows for sensing changes in vibration of the drive belt. Changes in vibration of the drive belt indicates changes in the drive belt properties, such as wear, misalignment, etc. Detecting changes in such properties is advantageous, as the information can be used to determine, for example, more accurately when the drive belt should be replaced. This is important to ensure maximum efficiency and efficacy during operation of the functional unit. Furthermore, timely replacement of the drive belt reduces the risk of unexpected downtime and further damage to the machine when the drive belt breaks during use.

In a preferred embodiment, the belt drive system further comprises a controller, operationally coupled to the vibration sensor, and configured to receive the vibration signal and to determine a condition of the drive belt based on the vibration signal. The controller enables automatic determination, using quantitative data (in the form of vibration signals), of the condition of the drive belt, which assists in determining when the belt drive should be replaced.

In a further preferred embodiment, the belt drive system further comprises a bearing vibration sensor mounted on a bearing or on a bearing housing of the driven pulley or the driving pulley. The controller is operationally coupled to the bearing vibration sensor and configured to receive a bearing vibration signal from the bearing vibration sensor. The controller is configured to use the bearing vibration signal to condition the vibration signal from the vibration sensor positioned on the tensioner system. Preferably, the controller uses the bearing vibration signal to filter out from the vibration signal from the vibration sensor on the tensioner system possible vibrations generated by the bearing of the driven or driving pulley, and/or vibrations generated in the functional unit or another part of the agricultural machine.

In another further preferred embodiment, the belt drive system comprises a speed sensor to measure directly or indirectly the rotational speed of the driven pulley or driving pulley. The speed can be directly measured with well known speed sensors, for example hall sensors, inductive sensors measuring revolutions per minute, or encoders. The speed sensors can measure directly the speed of the driven or driving pulley, or indirectly, for example as they measure the speed of another component in the drivetrain driving the driving pulley and estimate the speed of the driven or driving pulley based on the measured speed and the known kinematic configuration of the drivetrain. The controller is operationally coupled to the speed sensor and is configured to receive a rotational speed signal. The controller uses the rotational speed signal to condition the vibration signal from the vibration sensor. Preferably, the controller uses the rotational speed signal to determine characteristic frequencies or vibrations generated by the bearing of the driven or driving pulley, and/or frequencies or vibrations generated in the functional unit or another part of the agricultural machine, for example by bearings, pumps, etc based on specific configurations of these bearings, pumps, transmissions, engines etc. For bearings, the frequencies might include the ball pass frequency outer race, the ball pass frequency inner race, the ball spin frequency and the fundamental train frequency. Preferably, the controller uses the determined frequencies or vibrations to filter out from the vibration signal from the vibration sensor on the tensioner system possible vibrations generated by the bearing of the driven or driving pulley, and/or vibrations generated in the functional unit or another part of the agricultural machine.

In some embodiments, the belt drive system is configured to receive information about the load and/or throughput of the functional unit and/or agricultural machine. Preferably, the belt drive system has a interface to communicate with the controller of the functional unit and/or agricultural machine. The load and/or throughput of the functional unit and/or agricultural machine may be an estimated load and/or throughput. Communication can be via a wired connection or via a wireless connection. Preferably, the controller takes into account the load and/or throughput to determine the condition of the drive belt based on the vibration signal. The controller may adjust thresholds used to determine the condition of the drive belt based on the actual load and/or throughput. For example, the measured vibration of the belt driving a weed seed destructor will change as the throughput via the weed destructor changes.

In some embodiments, the controller is configured to determine the condition of the drive belt using the vibration signal and a machine learning algorithm. Using machine learning algorithms allows the controller to learn trends and patterns in the vibration signal. Over time, the controller may therefore be able to better distinguish noise in the vibration signal from genuine anomalies that may indicate relevant changes in the condition of the drive belt.

The machine learning algorithms may, for example, be trained using large amounts of vibration signal recordings, preferably obtained by the same or identical vibration sensors during previous harvesting sessions. During or after those harvesting sessions, experienced users, capable of judging the condition of the drive belt based on direct observation or inspection of camera images of the drive belt, may classify or assign values to the respective belt conditions. The machine learning algorithms may then correlate the observed belt conditions to the respectively recorded vibration signals. Instead of, or in addition to, using properly experienced users for assessing the drive belt conditions for training the machine learning algorithms, the belt conditions may be determined from image data using classic image recognition techniques and/or Al based image recognition techniques.

In some embodiments, the condition is a wear condition of the belt. Being able to determine a wear condition is advantageous as wear in the drive belt can negatively affect the efficiency of the functional unit, which leads to increased operational costs.

In some embodiments, the condition is an alignment and/or pretension state of the belt. Being able to determine an alignment and/or pretension state of the belt, or a change in alignment and/or pretension state of the belt is advantageous as it can negatively affect the lifetime of the belt.

In a preferred embodiment, the vibration sensor is positioned and oriented to measure vibrations in a direction perpendicular to a longitudinal axis of the drive belt. During operation of the functional unit, vibrations in a perpendicular direction to the longitudinal belt axis are larger than vibrations in other directions. Therefore, small changes in the vibration of the drive belt are detected more easily and accurately when measuring vibration in the perpendicular direction.

In some embodiments, the tensioner system comprises a tensioner pulley for contacting the drive belt, the tensioner pulley being mounted on a tensioner pulley axle and supported by a tensioner pully bearing. In such embodiments, the vibration sensor may be positioned at the tensioner pulley bearing, thereby allowing simultaneous measurement of the vibration of the drive belt and the vibration of the tensioner bearing. In embodiments where the vibration sensor is positioned at the tensioner bearing, the controller may thus be further configured to determine a condition of the tensioner bearing based on the vibration signal.

Determining a condition of the tensioner bearing is also useful, as any changes in the condition of the tensioner bearing may lead to sub-optimal operation of the functional unit, which could be remedied by, for example, replacing or lubricating the tensioner bearing. Frequency filtering, neural network based signal analysis, and other known signal analysis techniques may be used to separate and distinguish the contributions of various sources of the vibration signal.

In some embodiments, the tensioner system comprises a tensioner pulley for contacting the drive belt and a compression spring, the compression spring being configured to press the tensioner pulley against the drive belt, In such embodiments, the vibration sensor may be positioned on the compression spring.

Vibrations in the drive belt cause movement of the tensioner system. The compression spring may amplify the vibrations in the drive belt and thereby make it easier to accurately detect even small vibrations in the drive belt. Accordingly, small vibrations in the drive belt can be detected more easily and accurately when the vibration sensor is positioned on or at the compression spring.

In some embodiments, the controller may be configured to, in response to the condition of the drive belt not satisfying a criterion, provide a notification to check and/or adjust the pretension of the drive belt.

In some embodiments, the controller may be configured to, in response to the condition of the drive belt not satisfying a criterion, provide a notification to check and/or adjust the alignment of the drive belt.

In some embodiments, the controller may be configured to, in response to the condition of the drive belt not satisfying a criterion, provide a notification to check and/or replace the drive belt.

This notification warns the user about the condition of the drive belt, enables efficient operation of the belt drive system and reduces the risk of a broken belt suddenly and or unexpectedly stopping, and possibly even damaging, the agricultural machine. The notification can be a message on a display in the agricultural machine, or on a display of a mobile device.

In another aspect of the invention there is provided an agricultural machine comprising a functional unit and a belt drive system according to the invention. The driven pulley of the belt drive system is connected to the functional unit for driving the functional unit. The agricultural machine may be a combine harvester and the functional unit may be a straw chopper. Alternatively, the functional unit may be a dynamic feed roll or a weed seed destructor.

### BRIEF DESCRIPTION OF THE DRAWINGS

Embodiments of the invention will now be described by way of example with reference to the accompanying drawings, in which:
Figure 1 schematically shows a combine harvester wherein the invention may be advantageously used.
Figure 2 schematically shows a straw chopper according to an embodiment of the invention and suitable for use in the combine harvester of Figure 1.
Figure 3 schematically shows a belt drive system for a functional unit, such as the straw chopper of Figure 2.

### DETAILED DESCRIPTION

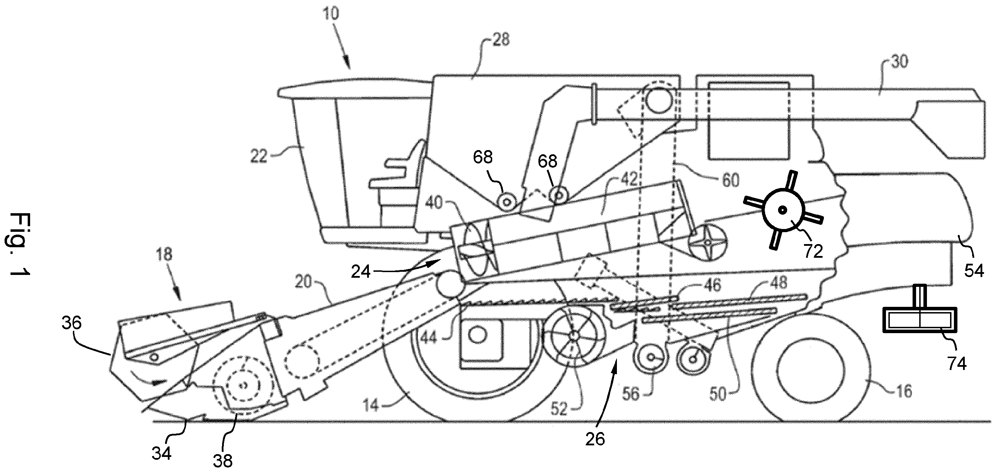

Figure 1 schematically shows an agricultural harvester 10 in the form of a combine harvester 10. A combine harvester 10 as shown in Figure 1 generally includes front and rear ground engaging wheels 14, 16, a header 18, a feeder 20, an operator cabin 22, a threshing and separation system 24, a cleaning system 26, a grain tank 28 and an unloading tube 30.

The header 18 is mounted to the front of the combine harvester 10 and includes a cutter bar 34 for severing crops from a field during forward motion of the harvester 10. A single or multi-segment rotatable reel 36 feeds the crop into the header 18, and an intake auger 38 feeds the severed crop laterally from each side towards the feeder 20. The feeder 20 conveys the severed crop to the threshing and separation system 24.

The threshing and separation system 24 is of the axial-flow type and comprises a threshing rotor 40 at least partially located and rotatable within a threshing concave 42. The threshing concave may take the form of a perforated concave. Grain from the severed crop is threshed and separated from the material other than grain (MOG) by the action of the threshing rotor 40 within the threshing concave 42. Larger elements of MOG, such as stalks and leaves do not pass through the perforations in the threshing concave 42 and are discharged from the rear of the combine harvester 10.

The release of straw residue behind the combine harvester 10 may be done by dropping the straw in a swath on the field, for example to allow it being picked up by a baler machine later. Often, however, the straw residue is chopped into smaller pieces by a straw chopper 72 and spread over the field across the full width of the header 18 by a spreader system 74. The spreader system 74 typically comprises a left and a right rotary spreader, each spreading the chopped crop residue received from the straw chopper 72 laterally and away from the combine harvester 10. The chaff and other small MOG coming from the cleaning system 26 may be dropped on the field, spread over the field by a separate chaff spreader (not shown), or mixed in with the straw residue to be spread together therewith by the spreader system 74. The straw, chaff, and other MOG that is spread over the field serves as fertilizer for the soil.

Grain and smaller elements of MOG (small MOG henceforth), such as chaff, dust and straw are small enough to pass through the perforations in the threshing concave 42. Grain and small MOG that has successfully passed the threshing and separation system 24 falls onto a preparation pan 44 and is conveyed towards the cleaning system 26. The cleaning system comprises a series of sieves and a cleaning fan 52. The series of sieves includes a pre-cleaning sieve 46, an upper (or chaffer) sieve 48 and a lower (or shoe) sieve 50. The cleaning fan 52 generates an airflow through the sieves 46, 48, 50 that impinges on the grain and small MOG thereon. The small MOG is typically lighter than the grain and is therefore separated from the grain as it becomes airborne. The small MOG is subsequently discharged from the combine harvester 10 via a straw hood 54.

The preparation pan 44 and pre-cleaning sieve 46 oscillate in a fore-to-aft manner to transport the grain and small MOG to the upper surface of the upper sieve 48. The upper sieve 48 is arranged vertically above the lower sieve 50 and oscillates in a for-to-aft manner too, such that the grain and small MOG are spread across the two sieves 48, 50, while also permitting cleaned grain to pass through openings in the sieves 48, 50 under the action of gravity.

Cleaned grain falls to a clean grain auger 56 that is positioned below and in front of the lower sieve 50 and spans the width of the combine harvester 10. The clean grain auger 56 conveys the cleaned grain laterally to a vertical grain elevator 60, which is arranged to transport the cleaned grain to the grain tank 28. Once in the grain tank 28, grain tank augers 68 at the bottom of the grain tank convey the cleaned grain laterally within the grain tank 28 to an unloading tube 30 for discharge from the combine harvester 10.

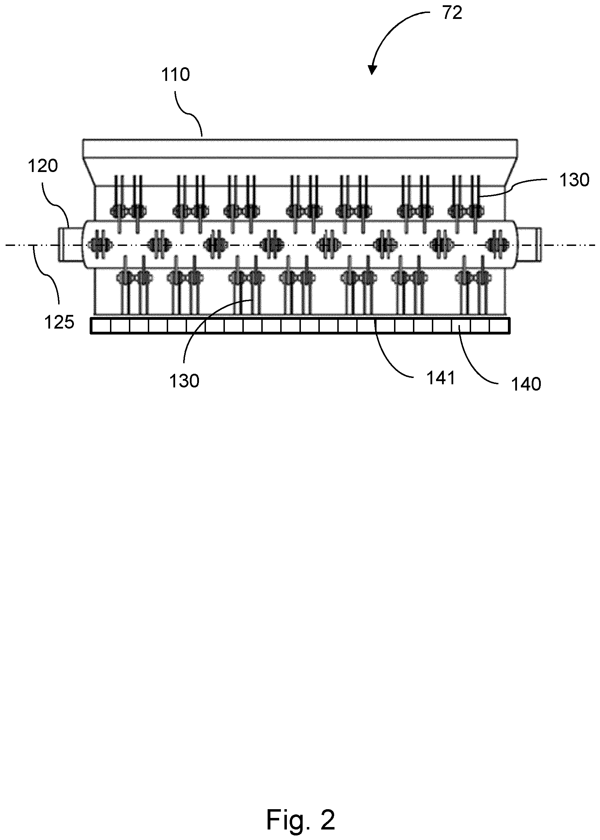

Figure 2 schematically shows a straw chopper 72 according to an embodiment of the invention and suitable for use in the combine harvester 10 of Figure 1. The straw chopper 72 is a functional unit of the combine harvester 10 and comprises a chopper housing 110, a rotational axle 120 carrying a plurality of knives 130, and a counter knife 140. The chopper housing 110 comprises an inlet for receiving unchopped straw and an outlet for releasing chopped straw. The rotational axle 120 is mounted to the chopper housing 110 or some other part of the combine harvester 10 for rotation around a chopper axis 125. The knives 130 extend radially from the rotational axle 120 and are configured for rotating therewith. The knives 130 and the counter knife 140 are configured to cooperatively exert a chopping action on the received straw. The counter knife 140 is typically provided as a bar comprising a plurality of parallel knife blades, positioned such that, during use, the chopper knives 130 on the rotational axle 120 move through gaps between two adjacent counter knife blades. In some embodiments, two or more counter knives 140 may be provided for providing increased cutting action.

Another type of functional unit that may be included in an agricultural machine (for example, in the combine harvester 10 of Figure 1) is a weed seed destroyer (also called destructor). Many weeds found in crops have a similar life cycle to the crops. Therefore, when a crop is harvested, many weeds may still have viable seeds that remain on the crop above the cutting height, which enter the agricultural machine during harvesting alongside the crops. The seeds may end up in a grain tank, out with straw residues, or out with chaff residues. Some agricultural machines comprise a processing unit that destroys the weed seeds. One method uses a hammer mill to destroy the weed seeds. A hammer mill uses a rotor with impact elements (hammers) to pulverise material. This configuration is known as a weed seed destroyer. A weed seed destroyer may have a somewhat similar structure to the straw chopper 72 shown in Figure 2, and operates in a similar way. The weed seed destroyer also comprises a housing arranged around a shaft. A plurality of hammers (flails) are mounted on the shaft. The hammers extend radially from the shaft and are configured to rotate as the shaft rotates. The hammers and the housing are positioned to allow the hammers to crush seeds between the hammers and the housing as the shaft rotates.

Functional units such as the straw chopper 72 in Figure 2 and the weed seed destroyer described above are typically driven using a belt drive system. The belt drive system couples the functional unit to an engine or a motor of the agricultural machine 10, and transfers power from the engine or motor to the functional unit. However, during use, various factors can affect the ability of the belt drive system to effectively transfer power, thereby affecting the efficiency of the functional unit. For example, belt wear, breakage, or misalignment may negatively affect the operation of the belt drive system, and thus the functional unit. It has been recognised that a system for monitoring the belt drive system during operation is desirable, so that any changes in condition of the belt drive system can be detected early. Early detection allows appropriate actions to be taken (e.g. belt replacement) to ensure optimal operation of the functional unit.

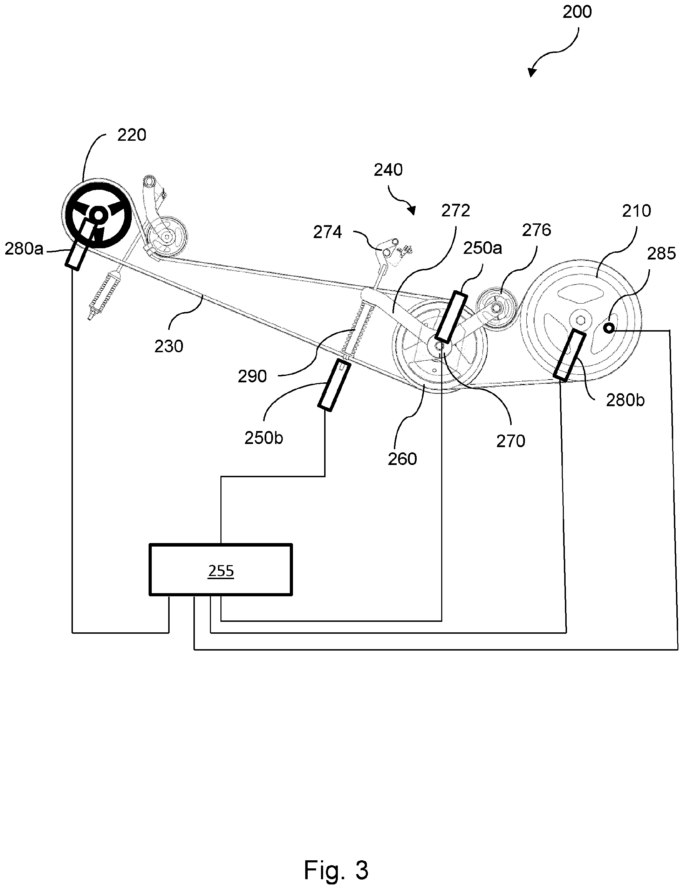

Figure 3 schematically shows a belt drive system 200 for a functional unit of an agricultural machine 10. The functional unit may be a straw chopper 72, such as that shown in Figure 2, a weed seed destroyer as described above, a dynamic feed roll, or any other type of functional unit in an agricultural machine 10 that is driven by a belt drive system. The belt drive system 200 comprises a driven pulley 210 and a driving pulley 220, a drive belt 230 interconnecting the driven pulley 210 with the driving pulley 220, and a tensioner system 240 configured for tensioning the drive belt 230. As in typical belt drive systems, the driving pulley 220 is connected to a drive shaft that is driven by a motor (or engine), and the rotational motion of the driving pulley 220 is translated via the drive belt 230 to the driven pulley 210. The driven pulley 210 is coupled to a shaft of the functional unit, and power is thus transferred from the driving pulley 220 to the functional unit. The tensioner system 240 ensures that tension is maintained in the drive belt 230 to ensure effective transfer of power, and thus efficient operation of the functional unit.

The tensioner system 240 of Figure 3 comprises a tensioner pulley 260 that is rotatably mounted on a tensioner arm 272 and supported by a tensioner pulley bearing 270. The tensioner pulley 260 is arranged to contact the drive belt 230. A compression spring 290 mounted to the tensioner arm 272 and is configured to press the tensioner pulley 260 against the drive belt 230 while the drive belt 230 loops around the driving and driven pulleys 220, 210. The tensioner arm 272 is coupled to the chassis of the combine harvester 10 via a tensioner adjustment mechanism 274. The tensioner adjustment mechanism 274 is configured to adjust the position of the tensioner arm 272, which in turn adjusts the position of the tensioner pulley 260, and thus the force on the compression spring 290. By adjusting the position of the tensioner pulley 260, the tensioner system 240 actively tensions the drive belt 230. As illustrated, the tensioner system 240 may further comprise an idler pulley 276 arranged for guiding and aligning the drive belt 230 in its loop around the driving and driven pulleys 220, 210.

The belt drive system 200 further comprises at least one vibration sensor 250 located on the tensioner system 240. Two vibration sensors 250a, 250b are shown in Figure 3, one vibration sensor 250a mounted on or at the tensioner bearing 270 and one vibration sensor 250b mounted on or at the compression spring 290. While two vibration sensors 250a, 250b are shown, this is merely to illustrate alternative positionings on the tensioner system 240. In other embodiments, just one vibration sensor 250a, 250b may be used, while further embodiments may use three or more.

Positioning the vibration sensor 250 on the tensioner system 240 allows for sensing changes in vibration of the drive belt 230. The drive belt 230 vibrates during operation of the belt drive system 200. Changes in vibration of the drive belt 230 may indicate changes in the drive belt properties, such as wear, damage, misalignment, etc. Misalignment may involve a mispositioning of the drive belt 230 and/or any of the pulleys in the belt drive system 200. Detecting changes in drive belt properties is advantageous, as the information can be used to determine more accurately, for example, when the drive belt 230 should be replaced. Replacing the drive belt 230 when it is worn or damaged for example, is important to ensure maximum efficiency and efficacy during operation of the functional unit. Another drive belt property that is derivable from the vibration pattern picked up by the vibration sensor 250 is belt tension. When the belt tension is too low, this can lead to slippage of the belt 230, and thus reduced power transmission and lifetime of the belt 230. When the belt tension is too high, this can also have a detrimental effect on the lifetime of the belt 230. Optionally, an actuator for operating the tensioner adjustment mechanism 274 is automatically controlled to adjust the belt tension depending on the vibration signal from vibration sensor 250.

The belt drive system 200 further comprises a controller 255 operationally coupled to the vibration sensor 250 and configured to receive a vibration signal therefrom, and to determine a condition of the drive belt 230 based on the vibration signal. In other words, the controller 255 is configured to assess the state of the drive belt 230 using the vibration measured by the vibration sensor 250. While in Figure 3 the controller 255 is shown as being coupled to two vibration sensors 250a, 250b, in other embodiments only one vibration sensor 250 may be included, and so the controller 255 is only coupled to a single vibration sensor 250.

The belt drive system 200 further comprises two bearing vibration sensors 280a, 280b mounted on a bearing of the driving pulley 220 and on a bearing of the driven pulley 210. The bearing vibration sensors 280a, 280b can be mounted on the bearing or on the bearing housing or nearby the bearing. The controller 255 is operationally coupled to the bearing vibration sensors 280a and 280b and configured to receive bearing vibration signals. The controller uses the bearing vibration signals to condition the vibration signal from the vibration sensors 250a and/or 250b. The controller uses the bearing vibration signal to filter out from the vibration signal possible vibrations generated by the bearings of the driven and driving pulley, and vibrations generated in the functional unit or another part of the agricultural machine 10. Alternatively, one bearing vibration sensor can be used, either on the driving or the driven pulley.

The belt drive system 200 further comprises a speed sensor 285 to measure the rotational speed of the driven pulley 210. Alternatively, a speed sensor could measure the rotational speed of the driving pulley 220, or another component in the drivetrain driving the driving pulley. The controller 255 is operationally coupled to the speed sensor 285 and configured to receive a rotational speed signal. The controller 255 uses the rotational speed signal to determine frequencies or vibrations generated by the bearing of the driven 210 or driving pulley 220, and/or vibrations generated in the functional unit or another part of the agricultural machine, for example based on characteristic bearing frequencies. The controller then uses these determined frequencies or vibrations to filter out from the vibration signal from the vibration sensor on the tensioner system possible vibrations generated by the bearing of the driven or driving pulley, and/or vibrations generated in the functional unit or another part of the agricultural machine. In this way, the controller conditions the vibration signal from the vibration sensor on the tensioner system, enabling more easy and/or more accurate signal processing and interpretation to determine the condition of the belt.

To determine the condition of the drive belt 230, the controller 255 may use characteristic frequencies in the vibration signal. Examples of characteristic frequencies include belt frequency, rotational frequencies of pulleys and rotating bodies in general (imbalance), specific bearing fault frequencies, specific frequencies caused by transmissions and/or gears, specific frequencies caused by pumps or engines. Accordingly, the controller 255 automatically determines the condition of the drive belt 230 using quantitative data in the form of vibration signals. Determining the condition of the drive belt 230 is useful, as this assists in determining when the drive belt 230 should be replaced, which is important for optimal functioning of the belt drive system 200.

In some embodiments, the condition to be determined is a wear condition of the drive belt 230. The controller 255 therefore determines the level of wear (degradation) in the drive belt 230 based on the vibration measured by the vibration sensor 250. Wear over time in drive belts is expected due to the mechanical loads in the belt drive system 200, however wear may be accelerated due to exposure to high temperatures or chemical agents. Being able to determine a wear condition is advantageous as wear in the drive belt 230 can negatively affect the efficiency of the functional unit, which leads to increased operational costs. Early detection therefore enables a user to replace the drive belt 230 when required for maintaining optimal efficiency of the functional unit.

Other examples of conditions that may be monitored by the controller 255 include belt misalignment, belt breakage, or a lack of surplus tension in the belt drive system 200. All of these conditions may affect power transfer in the belt drive system 200, and so may negatively affect the operation of the functional unit. Therefore, detecting these conditions early is desirable, as knowing the condition of the drive belt 230 assists a user in deciding when to replace or realign the drive belt 230.

As described, the condition (state) of the drive belt 230 is determined using the vibration signal. In some embodiments, the controller 255 is configured to determine the condition of the drive belt 230 using the vibration signal and a machine learning algorithm. The machine learning algorithm receives the vibration signal as an input and identifies (classifies) the condition of the drive belt 230.

The skilled person will be familiar with machine learning and machine learning algorithms (models), and will appreciate that a wide range of different algorithms may be used to determine the condition based on the measured vibration signal. The machine learning model may comprise a set of rules or (mathematical) functions that are used to perform a task related to data input into the algorithm. For example, the vibration signal may be input to a decision tree, which classifies the measured signals according to drive belt condition. In another example, a neural network may be trained to receive a vibration signal as input, to isolate the vibration signal from noise, and to classify the vibration signal as a particular condition (e.g., worn, broken, misaligned). Support vector machines and nearest neighbour searches are further examples of machine learning algorithms that may be used to determine the condition of the drive belt 230.

The machine learning algorithms may, for example, be trained using large amounts of vibration signal recordings, preferably obtained by the same or identical vibration sensors during previous harvesting sessions. During or after those harvesting sessions, experienced users, capable of judging the condition of the drive belt 230 based on direct observation or inspection of camera images of the drive belt 230, may classify or assign values to the respective belt conditions. The machine learning algorithms may then correlate the observed belt conditions to the respectively recorded vibration signals. Instead of, or in addition to, using properly experienced users for assessing the drive belt conditions for training the machine learning algorithms, the belt conditions may be determined from image data using classic image recognition techniques and/or Al based image recognition techniques.

Using machine learning algorithms allows the controller to learn trends and patterns in the vibration signal. Over time, the controller 255 may therefore be able to better distinguish noise in the vibration signal from genuine anomalies that may indicate relevant changes in the condition of the drive belt 230.

As described, the controller 255 determines the condition of the drive belt 230 based on the vibration signal. In some embodiments, in response to the condition of the drive belt 230 not satisfying a criterion, the controller 255 is further configured to provide a notification to replace the drive belt 230. In other words, if the controller 255 determines that a drive belt 230 condition (state) is outside pre-determined levels (i.e., levels that allow for acceptable operation efficiency of the functional unit), a notification is output to a user. The criterion may be, for example, a threshold level of wear, an acceptable range of surplus tension, or an acceptable range of belt misalignment. If the condition is found to be over the threshold or outside of the range, the notification is provided. This notification may warn the user that the drive belt 230 needs to be replaced for more efficient operation of the belt drive system 200 and to reduce the risk of a broken belt damaging the functional unit or agricultural machine 10. The notification may be provided as a pop-up on a connected display screen, a flashing light, or an alarm. Alternatively or additionally, a remaining lifetime of the drive belt 230 may be estimated based on the vibration signal and communicated to the user. This would allow the user to plan ahead for the timely replacement of the drive belt 230, instead of suddenly having to act when being notified of a current need for replacement.

When locating the vibration sensor 250a on the tensioner bearing 270, the vibration sensor 250a is arranged to both measure vibration of the drive belt 230 and vibration of the bearing 270. Accordingly, the vibration signal comprises two components, i.e., vibration from the drive belt 230 and vibration from the tensioner bearing 270. In other words, the controller 255 may determine the health state of the drive belt 230 (wear, misalignment) and the health state of the bearing 270, i.e., bearing degradation or failure simultaneously, using the vibration signal. Frequency filtering, neural network based signal analysis, and other known signal analysis techniques may be used to separate and distinguish the contributions of the two sources of the vibration signal (i.e., vibration from the drive belt 230 and the tensioner bearing 270). These techniques may also be used to distinguish (separate) any noise in the vibration signal. Determining a condition of the tensioner bearing 270 is also useful, as any changes in the condition of the tensioner bearing 270 may lead to sub-optimal operation of the functional unit, which could be remedied by, for example, replacing or lubricating the tensioner bearing 270.

As described above, the vibration sensor 250b may also be positioned on or at the compression spring 290. Vibrations in the drive belt 230 cause movement of the tensioner system 240. The compression spring 290 system amplifies the vibrations in the drive belt 230 and thereby make it easier to reliably and accurately detect even small vibrations in the drive belt 230.

Preferably, the vibration sensor 250a, 250b is positioned and oriented to measure vibrations in a direction perpendicular to a longitudinal axis of the drive belt 230. During operation of the functional unit, vibrations in a perpendicular direction to the longitudinal belt axis are larger than vibrations in other directions. Therefore, small changes in the vibration of the drive belt 230 are detected more easily and accurately when measuring vibration in the perpendicular direction. The vibration sensor 250a, 250b may be configured to measure vibration in a direction perpendicular to the axis of the drive belt both when positioned on the tensioner bearing 270 and on the compression spring 290.

It is noted that the same invention may be used in other belt driven functional units of the combine harvesters or in other types of agricultural harvesters. For example, the cutter drum or crop accelerator of a forage harvester are often driven in a similar way and may equally benefit of the current invention.

## Claims

1. A belt drive system (200) for a functional unit of an agricultural machine (10), the belt drive system (200) comprising:
a driven pulley (210) and a driving pulley (220);
a drive belt (230) interconnecting the driven pulley (210) with the driving pulley (220); and
a tensioner system (240) configured for tensioning the drive belt (230); and
a vibration sensor (250a, 250b) positioned on the tensioner system (240), the vibration sensor (250a, 250b) being configured to provide a vibration signal.

2. The belt drive system (200) of claim 1, further comprising a controller (255) operationally coupled to the vibration sensor (250a, 250b) and configured to receive the vibration signal and to determine a condition of the drive belt (230) based on the vibration signal.

3. The belt drive system (200) of claim 2, the belt drive system (200) further comprising a bearing vibration sensor (280a, 280b) mounted on a bearing or on a bearing housing of the driven pulley (210) or the driving pulley (220), whereby the controller (255) is operationally coupled to the bearing vibration sensor (280a, 280b) and configured to receive a bearing vibration signal and use the bearing vibration signal to condition the vibration signal from the vibration sensor (250a, 250b).

4. The belt drive system (200) of claim 2, the belt drive system (200) further comprising a speed sensor to measure directly or indirectly the rotational speed of the driven pulley (210) or driving pulley (220), whereby the controller (255) is operationally coupled to the speed sensor and configured to receive a rotational speed signal and use the rotational speed signal to condition the vibration signal from the vibration sensor (250a, 250b).

5. The belt drive system (200) of any of the claims 2 to 4, wherein the controller (255) is configured to receive information about the load and/or throughput of the functional unit and/or agricultural machine (10) and use the information to determine the condition of the drive belt (230).

6. The belt drive system (200) of any of the claims 2 to 5, wherein the controller (255) is configured to determine the condition of the drive belt (230) using the vibration signal and a machine learning algorithm.

7. The belt drive system (200) of any of the claims 2 to 6, wherein the condition is a wear condition.

8. The belt drive system (200) of any of the claims 2 to 6, wherein the condition is an alignment or pretension state of the belt (230), or a change in alignment or pretension state of the belt (230).

9. The belt drive system (200) of any preceding claim, wherein the vibration sensor (250a, 250b) is positioned and oriented to measure vibrations in a direction perpendicular to a longitudinal axis of the drive belt (230).

10. The belt drive system (200) of any preceding claim, wherein the tensioner system (240) comprises a tensioner pulley (260) for contacting the drive belt (230), the tensioner pulley being mounted on a tensioner pulley axle and supported by a tensioner pulley bearing (270), and wherein the vibration sensor (250a) is positioned at the tensioner pulley bearing (270).

11. The belt drive system (200) of claim 10, when dependent on any of claims 2 to 9, wherein the controller (255) is further configured to determine a condition of the tensioner pulley bearing (270) based on the vibration signal.

12. The belt drive system (200) of any of claims 1 to 9, wherein the tensioner system (240) comprises a tensioner pulley (260) for contacting the drive belt (230) and a compression spring (290), the compression spring (290) being configured to press the tensioner pulley (260) against the drive belt (230) , and wherein the vibration sensor (250b) is positioned on or at the compression spring (290).

13. The belt drive system (200) of any of claims 2 to 8, wherein the controller (255) is further configured to provide a notification to check and/or adjust the pretension of the drive belt (230), to check and/or adjust the alignment of the drive belt (230), to check and/or replace the drive belt (230) in response to the condition of the drive belt (230) not satisfying a criterion.

14. An agricultural machine comprising a functional unit and a belt drive system (200) according to any of the preceding claims, the driven pulley (210) of the belt drive system (200) being connected to the functional unit for driving the functional unit.

15. An agricultural machine according to claim 14, wherein the agricultural machine is a combine harvester (10) and the functional unit is a straw chopper (72).

16. An agricultural machine according to claim 15, wherein the functional unit is a weed seed destructor.
